# EUROPÄISCHE PATENTANMELDUNG

(11) **EP 1 752 789 A1**
(43) Veröffentlichungstag der Anmeldung: **14.02.2007**
(21) Anmeldenummer: 05107274.2
(22) Anmeldetag: 08.08.2005
(51) Int. Cl.: G01S 7/497, G01S 17/36

(54) **Vorrichtung und Verfahren zur Kalibrierung von Entfernungsmessgeräten**

(71) Anmelder: Leica Geosystems AG, 9435 Heerbrugg (CH)
(72) Erfinder: Giger, Kurt, CH-9464 Heerbrugg (CH); Predl, Gerhard, A-6840 Götzis (AT)
(74) Vertreter: Büchel, Kaminski & Partner

(57) **Zusammenfassung**

In einer Kalibriervorrichtung für Entfernungsmessgeräte mit einem Sender (1), der optische Strahlung (S) zur Beleuchtung eines Messobjekts emittiert, und einem Messempfänger (6), der vom Messobjekt reflektierte Strahlung (S) detektiert, wird mittelbar oder unmittelbar ein niederfrequentes Messsignal für eine Entfernungsmessung nach dem Phasenmessprinzip erzeugt. Dabei erfolgt eine Erfassung der des hochfrequenten elektronischen Modulationssignals (MOF) für den Sender (1) über einen elektronischen Referenzpfad (RP) von der Ansteuerleitung zu einem ersten Frequenzmischer (3), wobei im ersten Frequenzmischer (3) ein niederfrequentes Referenzsignal entsteht und aus Messsignal und Referenzsignal eine gegenseitige Phasenlage zur Entfernungsmessung ermittelt wird.

## Beschreibung

Die Erfindung betrifft eine Vorrichtung und ein Verfahren zur Kalibrierung von Entfernungsmeßgeräten entsprechend dem Oberbegriff des Anspruchs 1 bzw. 6.

Als Handmeßgeräte oder Industriesensoren ausgebildete Entfernungsmeßgeräte sind seit längerer Zeit bekannt und im Handel erhältlich. Ihr Entfernungsmeßbereich beträgt bis zu 200m und sie werden beispielsweise in der Bauvermessung, z.B. zum 3-dimensionalen Vermessen von Räumen eingesetzt. Ein Sender emittiert hierfür intensitätsmodulierte Strahlung, wobei zumeist Wellenlängen im sichtbaren Bereich verwendet werden, was die Anzielung der Meßpunkte erleichtert. Die Strahlung wird vom Meßobjekt reflektiert bzw. gestreut und vom Empfänger aufgenommen. Aufgrund der Phasenlage der modulierten Strahlung gegenüber dem Sender ergibt sich die Entfernung zum Meßobjekt.

Die Meßgenauigkeit dieser Entfernungsmeßgeräte wird stark von Umwelt- und gerätebedingten Einflüssen bestimmt. Beispielsweise wirken sich wechselnde Umgebungstemperaturen, der große Dynamikbereich der Reflexion des beleuchteten Meßobjekts, aber insbesondere eine bauteilbedingte Temperaturdrift der Elektronik auf die Entfernungsmessung aus. Um diese Einflüsse zu verringern wird häufig eine geräteinterne Referenzstrecke bekannter Länge zur Kalibrierung verwendet.

Fallen die Detektion von Meß- und Referenzstrahlung zeitlich auseinander, so ändern sich die Driftzustände der elektronischen Bauteile. Alle elektronischen Bauteile und Leitungen bewirken im Signalpfad eines optischen Entfernungsmeßgerätes Signalverzögerungen. Diese sind nicht nur statischer Natur sondern sie ändern sich auch zeitlich, insbesondere aufgrund der Temperatur der elektronischen Bauteile. Neben Temperaturänderungen der Umgebung ist hauptsächlich die Eigenerwärmung der Elektronik, hier vor allem der Senderelektronik, für die Drift der Signale verantwortlich. Ein Phasenmesser registriert diese Signalverzögerungen als Phasenverschiebungen, die zusätzlich zu der eigentlich zu bestimmenden entfernungsabhängigen Phasenverschiebung hinzukommen.

Besonders ausgeprägt ist dieser Effekt direkt nach dem Einschalten des Entfernungsmeßgerätes, da in diesem Zustand die Temperaturänderungen der elektronischen Bauteile durch ihre Eigenerwärmung am größten sind. Dadurch kommt es zu besonders großen Signalverzögerungen, die eine PhasenVerschiebung der Signale und somit Fehler in der Entfernungsmessung bewirken. Aber gerade für batteriebetriebene Handmeßgeräte besteht die Forderung, daß sofort nach Einschalten des Gerätes mit der spezifizierten Genauigkeit gemessen werden soll. Durch mehrmaliges mechanisches Umschalten zwischen Meß- und Referenzstrahlung während einer Messung wird die thermische Drift der Elektronik zu einem Teil kompensiert. Eine hohe Meßgenauigkeit bei kurzen Meßzeiten unmittelbar nach dem Einschalten des Geräts wird dabei allerdings nicht erreicht.

Zudem sind viele Geräte so eingerichtet, daß sich am Ende einer Entfernungsmessung nach einer kurzen Wartezeit zumindest die Hochfrequenzelektronik des Senders automatisch abschaltet, da diese besonders viel elektrische Energie verbraucht. Durch die automatische Abschaltung wird die Batterie des Handmeßgerätes geschont. Bei einer erneuten Meßanforderung schaltet sich das Gerät dann automatisch wieder ein, wobei sich die damit verbundenen thermischen Driftprobleme, wie oben geschildert, wiederholen.

Einen weiteren Anteil zur Meßungenauigkeit liefert auch die üblicherweise als Meßempfänger eingesetzte Avalanche-Photodiode. Diese besitzt zwar den Vorteil einer hohen Verstärkung, muß dafür aber mit einer hohen, von der Temperatur der Diode abhängigen Arbeitsspannung betrieben werden. Da jedoch diese Arbeitsspannung in Abhängigkeit von der Diodentemperatur nachgeregelt werden muß, verändert sich zwangsläufig auch die Phasenlage des Empfangssignals und damit der Meßwert der Entfernung.

Aus der DE 22 29 339 B2 ist ein elektrooptischer Entfernungsmesser bekannt, bei dem der emittierte Lichtstrahl zur Grob- und Feinmessung umschaltbar mit zwei verschiedenen Meßfrequenzen moduliert wird. Im Empfänger wird die Grobmeßfrequenz direkt ohne Mischung den Zwischenfrequenz-Verstärkern (ZF) zugeführt. Zudem wird im Empfänger ein Hilfsoszillator verwendet, dessen Frequenz so gewählt ist, daß sie der Differenz der beiden Meßfrequenzen entspricht. Somit sind die Grobmeßfrequenz und die Niederfrequenz, die sich bei der Feinmessung nach einer Frequenzmischung ergibt, gleich. Dadurch wird ein sonst üblicher zweiter Hilfsoszillator eingespart, was zur Reduzierung teurer Bauteile führt. Bei der Durchführung einer Entfernungsmessung wird mit Hilfe einer mechanischen Umschaltblende der Meßstrahl wechselweise über eine Meß- und Kalibrierstrecke geführt.

Die DE 4 316 348 A1 offenbart eine Vorrichtung zur Distanzmessung, bei der mit Hilfe einer schaltbaren Strahlenumlenkeinrichtung eine interne Referenzstrecke erzeugt wird. Dabei wird die Strahlenumlenkeinrichtung um eine Achse motorisch in den Meßlichtstrahlengang eingeschwenkt, wo sie das Meßlicht jetzt als Referenzlicht zur Kalibrierung auf die Empfangseinrichtung lenkt. Durch die mechanische Umschaltung der Strahlenumlenkeinrichtung gelangen somit Referenzlicht und Meßlicht abwechselnd auf die Empfangseinrichtung. Diese Umschaltung kann während eines Entfernungsmeßvorganges mehrmals erfolgen.

Beide Ansätze des Stands der Technik verwenden somit eine schaltbare Referenzstrecke, die einen hohen apparativen Aufwand erfordert und zudem zum beschriebenen zeitlichen Auseinanderfallen von Referenz- und eigentlicher Entfernungsmessung führt.

Aus der EP 0 932 835 ist eine Schaltungsanordnung bekannt, bei der aus dem Senderstrahlengang des Entfernungsmeßgeräts permanent ein Teil der hochfrequent modulierten Senderstrahlung ausgekoppelt und über eine als Kalibrierstrecke dienende interne Referenzstrecke einem Referenzempfänger, z.B. einer PIN-Diode, zugeführt wird. Diese ist mit einem Frequenzmischer verbunden, der wiederum direkt mit der als Meßempfänger der Meßstrahlung eingesetzten Avalanche-Photodiode verbunden ist. In diese Verbindung wird ein hochfrequentes elektrisches Signal als Mischerfrequenz eingekoppelt. Diese Mischerfrequenz wird somit einerseits über den Frequenzmischer mit dem hochfrequenten Modulationssignal der von dem Referenzempfänger empfangenen Referenzstrahlung gemischt, wodurch ein niederfrequentes Kalibriersignal entsteht. Andererseits wird die Mischerfrequenz mit dem hochfrequenten Modulationssignal der von der Avalanche-Photodiode empfangenen Meßstrahlung gemischt, wodurch ein niederfrequentes Meßsignal entsteht. Die Avalanche-Photodiode stellt dabei einen sogenannten Direktmischer dar. Das niederfrequente Kalibrier- und das niederfrequente Meßsignal werden der Phasenmessung zugeführt. Dabei können zwei separate Phasenmesser zur gleichzeitigen Phasenmessung eingesetzt werden. Die Phasenmessung ist aber auch mit nur einem Phasenmesser durch sequentielles Messen möglich.

Diese Anordnung nutzt einen internen Referenzlichtweg, der als optische Strecke weiterhin entsprechend ausgebildete optische Komponenten aufweist, was einen erhöhten technischen Aufwand bedingt. Zudem werden zwei Empfangsdioden benötigt.

Kalibriervorrichtungen des Stands der Technik weisen somit entweder eine Umschaltung zwischen internem und externem Lichtweg oder zwei Empfangsdioden für die beiden Lichtwege auf.

Es ist die Aufgabe der Erfindung, bei der optoelektronischen Entfernungsmessung eine Vorrichtung zur Kalibrierung anzugeben, mit der die Zuverlässigkeit des Geräts erhöht und mit der eine einfache und kompakte Konstruktion ermöglicht wird.

Diese Aufgaben werden durch die Gegenstände des Anspruchs 1 bzw. 6 oder der abhängigen Ansprüche gelöst bzw. die Lösungen weitergebildet.

Die erfindungsgemässe Kalibriervorrichtung bzw. das Kalibrierverfahren basieren auf dem Ersatz der optischen Referenzstrecke durch eine rein elektronische Lösung, so dass optische Komponenten, wie z.B. mechanische Umschaltvorrichtungen oder ein Strahlteiler und eine Photodiode für den optischen Referenzpfad eingespart werden.

Anstelle des mit der Photodiode erzeugten Referenzsignal aus der über den Referenzweg geführten optischen Strahlung tritt ein Signal, welches elektrisch aus der Laseransteuerung ausgekoppelt wird. Die Auskopplung kann dabei kapazitiv, induktiv oder über einen ohmschen Widerstand erfolgen, wobei auch eine Kombination dieser Auskopplungs-Varianten möglich ist

Für eine angestrebte Genauigkeit im Millimeter-Bereich muss die Verzögerung im Kalibrierpfad im Vergleich zum Messpfad für einige Pikosekunden stabil bleiben, da ein Millimeter Strecke 6.6 Pikosekunden Verzögerung entspricht. Dabei unterscheidet sich der Signalweg im Referenzpfad gegenüber dem von der Strahlung zum Meßobjekt und wieder zurück zurückgelegten Messweg um mehrer Komponenten.

Ein erster Unterschied ist die angesteuerte Laserdiode, vor der das Ansteuersignal abgegriffen wird. Durch die im Messweg angeordnete Laserdiode wird dieses elektrische Steuersignal in Licht umgewandelt. Im Referenzweg wird hingegen das direkt erfasste elektrische Ansteuersignal verwendet. Mit kurzen Steuerimpulsen und einem auf minimale Verzögerung optimierten Aufbau kann die geforderte Stabilität der Verzögerung realisiert werden. Der stabile Verzögerungsunterschied kann dabei, z.B. während der Fertigung, in einem Kalibrierprozess ermittelt und im Gerät dauerhaft abgespeichert werden.

Eine transformatorähnliche Auskopplung des Ansteuersignals ist ebenfalls erfindungsgemäss nutzbar. Das Laserlicht ist nach Überschreiten des Schwellstromes der Laserdiode proportional zum Ansteuerstrom. Speziell für Steuerströme, welche ein Mehrfaches des Schwellstroms erreichen, ist diese Methode geeignet, was beispielsweise bei sehr kurzen Pulsen mit hohen Pulsspitzenleistungen der Fall ist.

Ein weiterer Unterschied der Signalwege ist die gegebenenfalls vorhandene Avalanche-Photodiode oder ein anderer Direktmischer. Die Verzögerung in einer Avalanche Photodiode kann dabei durch Optimierung der temperaturabhängigen Verstärkung oder Durchbruchspannung verbessert werden. Eine weitere Verbesserung wird durch Verwendung eines induktivitätsarmen Gehäuses bei Befestigung als oberflächenmontiertes Bauelement bzw. durch SMD-Technologie erzielt. Weiter kann die Kapazität der Photodiode durch die Verwendung einer verkleinerten optisch aktiven Fläche verbessert werden. Ein verbleibender Restfehler als Verzögerungsunterschied von Mess- zu Referenzsignalstrecke kann, z.B, während der Fertigung, ermittelt und im Gerät dauerhaft abgespeichert werden, so dass das Referenzsignal gegenüber dem Messsignal kalibriert ist. Während einer Messung können dann entsprechende Korrekturwerte mitverrechnet werden.

Ein dritter Unterschied ist Ausgestaltung des Mischers der die Hochfrequenzsignale in niederfrequente Signale umwandelt. Ein erfindungsgemässes Ausführungsbeispiel verwendet zwei identische Mischer, die auf bzw. in dem gleichen Substrat, wie z.B. auf dem gleichen Halbleiterchip, angeordnet sind, so dass die auftretenden Einflüsse beide Mischer in gleicher oder zumindest ähnlicher Weise beeinflussen. Damit können die Verzögerungen in den Mischern für Mess- und Referenzsignal sehr stabil und mit gleichen Temperatureinflüssen realisiert werden.

Erfindungsgemäss ist aber auch ein Ausführungsbeispiel möglich, das einen Direktmischer im Messkanal und einen hiervon getrennten, separaten Mischer im Referenzkanal verwendet.

Die erfindungsgemässe Vorrichtung erlaubt es, Temperaturdriften des Senders, insbesondere der Senderdiode und der zugehörigen Treiberelektronik kurz nach dem Einschalten des Geräts, durch die Nutzung der elektronischen Referenzstrecke zu kompensieren. Dabei erfolgt die Messung über Referenz- und Meßstrecke zeitgleich, so dass sich eine Drift des Senders bei der Differenzbildung der Phasen herauskalibriert. Insgesamt wird durch diese optoelektronische Kalibrierung durch Erfassung der Ansteuersignale die Genauigkeit der Entfernungsmessung erhöht, und zwar selbst unter den Anforderungen, daß nur kurze Meßzeiten zugelassen sind und daß sofort nach Einschalten des Geräts die erhöhte Meßgenauigkeit erreicht wird. Außerdem werden im Vergleich zu den herkömmlichen sukzessiven Meßmethoden die Meßzeiten Hälfte verkürzt, da Umschaltvorgänge entfallen.

Auch die Gerätezuverlässigkeit wird durch die Erfindung verbessert, da keine optische Referenzstrecke mit Umschaltelementen oder Strahlteilern mehr erforderlich ist. Darüber hinaus wirkt sich der Wegfall dieser Komponenten durch geringeres Gewicht und Volumen für ein Handmeßgerät positiv aus. Schließlich ist mit den kurzen Meßzeiten eine deutlich größere Anzahl von Messungen bei einer vorgegebenen Akkumulatorladung möglich. Im folgenden werden Ausführungsbeispiele der Erfindung anhand der Zeichnung näher erläutert. Es zeigt:
- Fig. 1: ein erstes Ausführungsbeispiel einer erfindungsgemässen Kalibriervorrichtung mit einem Direktmischer im Messkanal und einem separaten Mischer im Referenzkanal und
- Fig. 2: ein zweites Ausführungsbeispiel einer erfindungsgemässen Kalibriervorrichtung mit zwei identischen Mischern auf dem gleichen Halbleiterchip.

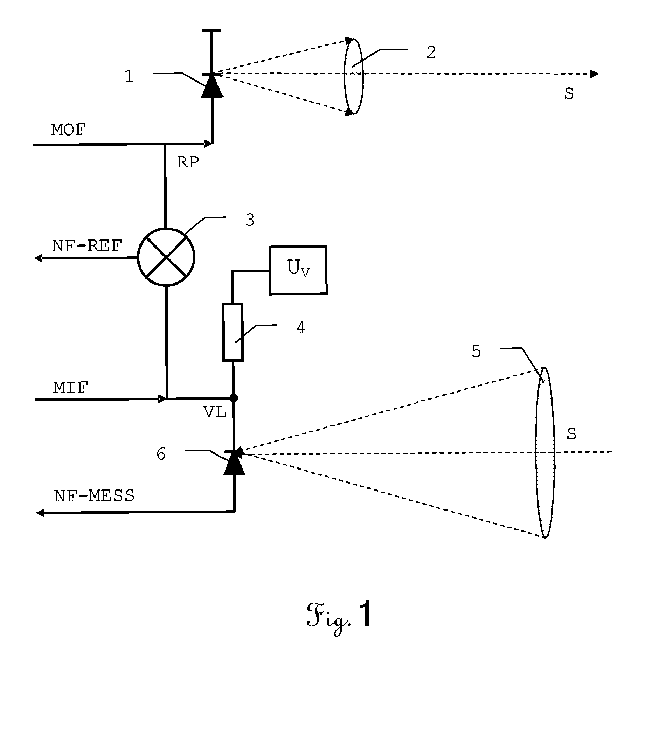

Fig. 1 zeigt schematisch ein erstes Ausführungsbeispiel einer erfindungsgemässen Kalibriervorrichtung mit einem Direktmischer im Messkanal und einem separaten Mischer im Referenzkanal. Zur Vermessung eines Meßobjektes wird von einem Sender 1 Strahlung S emittiert, wobei der Sender 1 mittels einer Modulationsfrequenz MOF als Ansteuerfrequenz zur intensitätsmodulierten Emission veranlaßt wird. Die vom Sender 1 emittierte und von einer Kollimationsoptik 2 kollimierte optische Strahlung S wird als ein Meßstrahlenbündel auf ein Meßobjekt, dessen Entfernung bestimmt werden soll, ausgesandt und nach der Reflektion über eine Empfangsoptik 5 auf einen Meßempfänger 6 geleitet.

Zur Bereitstellung einer Referenzgröße wird das Modulationssignal der Modulationsfrequenz MOF noch vor dem Sender 1 abgegriffen bzw. erfasst und über eine elektrische Verbindung auf einen ersten Frequenzmischer 3 geführt. Die Verbindung von der Signalleitung zum Sender 1 bis zum ersten Frequenzmischer 3 definiert den elektronischen Referenzpfad RP.

Dem Sender 1 wird eine hochfrequente Modulationsfrequenz MOF als Modulationssignal aufgeprägt, mit der die emittierte Strahlung intensitätsmoduliert wird. Mit einer ähnlich großen Frequenz als Mischerfrequenz MIF werden gleichzeitig der erste Frequenzmischer 3 und der Meßempfänger 6 versorgt, wobei als Meßempfänger 6 eine Avalanche-Photodiode eingesetzt, die als Direktmischer betrieben wird und die über einen Vorwiderstand 4 an einer variablen Vorspannung Uᵥ liegt.

Die Mischung der vom Meßempfänger 6 empfangenen Meßsignale mit den Signalen der Mischerfrequenz MIF führt zu einem niederfrequenten Signal NF-MESS. Die bei der Mischung - oder mathematisch gesehen einer Multiplikation - der Signale ebenfalls entstehenden hochfrequenten Signalanteile können mit üblichen Filtern ausgefiltert werden. Zugleich werden die Signale der Mischerfrequenz MIF auch mit dem Modulationssignal im Frequenzmischer 3 gemischt und führen zu einem niederfrequenten Signal NF-REF. Die gegenseitige Phasenlage von NF-MESS und NF-REF wird mit Hilfe je eines Phasenmessers gleichzeitig oder einem einzelnen Phasenmesser nacheinander gemessen. Es wird die Phasendifferenz dieser niederfrequenten Signale gebildet, woraus sich die Entfernung zum Meßobjekt ergibt.

Durch die direkte elektrische Verbindungsleitung VL von Meßempfänger 6 und Mischer 3, die mit der hochfrequenten Mischerfrequenz MIF beaufschlagt wird, folgt, dass die vom Meßempfänger 2 erzeugten unerwünschten Phasen-Verschiebungen, die aufgrund der temperaturabhängigen Spannungsnachführung der Vorspannung Uᵥ unvermeidbar entstehen, gleichzeitig und in gleichem Ausmaß die Signale NF-MESS und NF-REF beeinflussen. Dadurch werden bei der Differenzbildung dieser beiden Signale die unerwünschten Phasenverschiebungen durch den Meßempfänger 6 vollständig ausgeglichen. Somit wird durch die Verbindungsleitung VL eine sehr genaue Kalibrierung für die Entfernungsmessung ermöglicht. Darüber hinaus werden zugleich auch die Driften des Senders 1 und seiner Treiberelektronik aufgrund des zeitgleichen Erfassens von Referenzsignal und des Meßstrahlung während der laufenden Entfernungsmessung kompensiert. Somit ist die Phasendifferenz unabhängig von der Drift des Senders 1. Die Phasendifferenz enthält im wesentlichen nur noch die Entfernungsinformation. Mit dieser Kalibrierung über einen elektrischen Referenzpfad RP verringert sich die Komplexität des Geräts im Vergleich zu der Kalibrierung mit optischem Referenzpfad deutlich. Zudem werden Gewicht und Platzbedarf verringert, die Zuverlässigkeit des Geräts erhöht und eine größere Anzahl von Messungen mit nur einer Akkumulatorladung möglich.

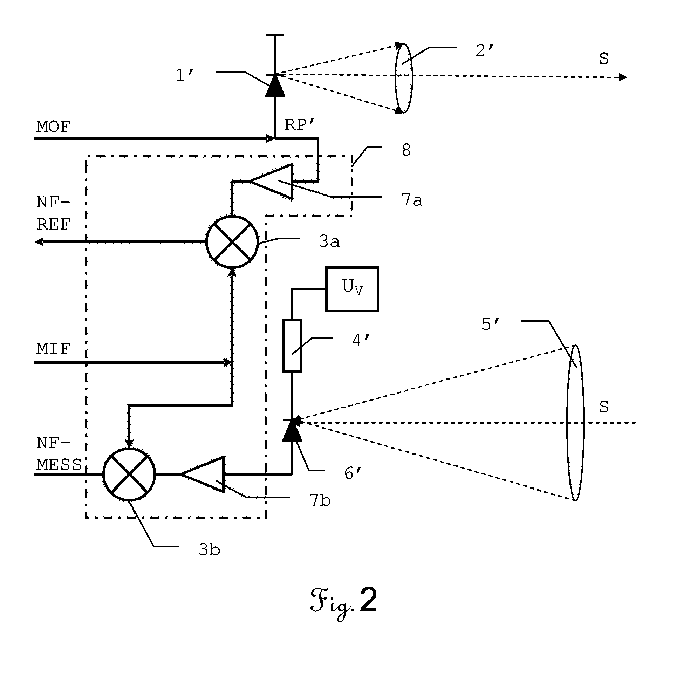

In Fig. 2 wird ein zweites Ausführungsbeispiel einer erfindungsgemässen Kalibriervorrichtung mit zwei identischen Mischern auf dem gleichen Halbleiterchip schematisch dargestellt. Auch bei diesem zweiten Ausführungsbeispiel wird von einem Sender 1' Strahlung S über eine Kollimationsoptik 2' auf ein Meßobjekt emittiert, wobei der Sender 1' mittels einer Modulationsfrequenz MOF intensitätsmoduliert und das Modulationssignal über einen elektronischen Referenzpfad RP' erfaßt und zum ersten Frequenzmischer 3a geführt wird. Nach der Reflektion am Meßobjekt wird die Strahlung S über eine Empfangsoptik 5' auf einen Meßempfänger 6' geleitet.

Hierbei wird der erste Frequenzmischer 3a und ein zweiter, dem Messempfänger 6' zugeordneter Frequenzmischer 3b zur Erzeugung des niederfrequenten Messsignals zusammen mit vorgeschalteten Verstärkern 7a und 7b auf einem gemeinsamen Substrat 8 angeordnet oder in diesem ausgebildet, z.B. als Halbleiterbaustein.

Durch die Ausbildung von elektronischen Komponenten auf dem gleichen Substrat 8 werden diese gleichartig beeinflußt, so dass sich die Einflüsse in identischer Weise auswirken, z.B. hinsichtlich einer thermischen Drift, und somit in der Signalverarbeitung bei der Ableitung der Phasendifferenz herausfallen.

## Patentansprüche

1. Kalibriervorrichtung für Entfernungsmessgeräte mit
• einem Sender (1,1'), insbesondere einer Laserdiode, der optische Strahlung (S) zur Beleuchtung eines Messobjekts emittiert,
• einem Messempfänger (6,6'), der vom Messobjekt reflektierte Strahlung (S) zur mittelbaren oder unmittelbaren Bereitstellung eines niederfrequenten Messsignals detektiert,
wobei die Entfernungsmessung nach dem Phasenmessprinzip erfolgt und der Sender (1,1') über eine Ansteuerleitung mit einem elektronischen Modulationssignal (MOF) hochfrequent moduliert wird,
**gekennzeichnet durch**
einen elektronischen Referenzpfad (RP,RP') von der Ansteuerleitung zu einem ersten Frequenzmischer(3,3a) zum Erfassen des Modulationssignals, wobei im ersten Frequenzmischer (3,3a) ein niederfrequentes Referenzsignal entsteht und aus Messsignal und Referenzsignal eine gegenseitige Phasenlage zur Entfernungsmessung ermittelt wird.

2. Kalibriervorrichtung nach Anspruch 1,
**dadurch gekennzeichnet, dass**
das Modulationssignal induktiv, kapazitiv und/oder über einen elektrischen Widerstand erfasst wird.

3. Kalibriervorrichtung nach Anspruch 1 oder 2,
**dadurch gekennzeichnet, dass**
der Messempfänger (6,6') als Direktmischer, insbesondere als Avalanche-Photodiode, ausgebildet ist.

4. Kalibriervorrichtung nach Anspruch 3,
**dadurch gekennzeichnet, dass**
der Direktmischer eine als oberflächenmontiertes Bauelement befestigte Avalanche-Photodiode mit induktivitätsarmem Gehäuse ist.

5. Kalibriervorrichtung nach Anspruch 1 oder 2,
**gekennzeichnet durch**
einen zweiten Frequenzmischer (3b) zur Erzeugung des niederfrequenten Messsignals, wobei der erste Frequenzmischer (3,3a) und der zweite Frequenzmischer (3b) auf einem gemeinsamen Substrat (8) angeordnet sind, insbesondere auf einem gemeinsamen Halbleiterbaustein.

6. Kalibrierverfahren für Entfernungsmessgeräte mit
• einem Sender (1,1'), insbesondere einer Laserdiode, der optische Strahlung (S) zur Beleuchtung eines Messobjekts emittiert,
• einem Messempfänger (6,6') der vom Messobjekt reflektierte Strahlung (S) zur mittelbaren oder unmittelbaren Bereitstellung eines niederfrequenten Messsignals detektiert,
wobei die Entfernungsmessung nach dem Phasenmessprinzip erfolgt und der Sender (1,1') über eine Ansteuerleitung mit einem elektronischen Modulationssignal hochfrequent moduliert wird,
**gekennzeichnet durch**
- ein Erfassen des Modulationssignals und
- ein Erzeugen eines niederfrequenten Referenzsignals
aus dem erfassten Modulationssignal,
wobei aus Messsignal und Referenzsignal eine gegenseitige Phasenlage zur Entfernungsmessung ermittelt wird.

7. Kalibrierverfahren nach Anspruch 6,
**dadurch gekennzeichnet, dass**
das Erfassen des Modulationssignals dem Sender (1,1') vorgeschaltet erfolgt.

8. Kalibrierverfahren nach Anspruch 6 oder 7,
**dadurch gekennzeichnet, dass**
das Referenzsignal gegenüber dem Messsignal kalibriert wird.
